## Europäisches Patentamt
## European Patent Office
## Office européen des brevets

(11) Publication number: **0 141 520**
**B1**

# EUROPEAN PATENT SPECIFICATION

(45) Date of publication of patent specification: **25.05.88**

(51) Int. Cl.⁴: **H 04 B 1/66, H 04 B 14/04**

(21) Application number: **84306439.5**

(22) Date of filing: **20.09.84**

(54) Sub-band coding method.

(30) Priority: **06.10.83 GB 8326719**

(43) Date of publication of application:
**15.05.85 Bulletin 85/20**

(45) Publication of the grant of the patent:
**25.05.88 Bulletin 88/21**

(84) Designated Contracting States:
**AT BE CH DE FR GB IT LI LU NL SE**

(56) References cited:
**US-A-2 810 787**
**1978 IEEE INTERNATIONAL CONFERENCE ON ACOUSTICS,SPEECH & SIGNAL PROCESSING, April 10-12, 1978, Camelot Inn, TULSA, OKLAHOMA, (US) pages 320-325, NEW YORK, (US). D. ESTEBAN et al.: "32 KBPS CCITT Compatible spliband coding scheme".**

(73) Proprietor: **BRITISH TELECOMMUNICATIONS plc**
**British Telecom Centre 81 Newgate Street London EC1A 7AJ (GB)**

(72) Inventor: **Hanes, Roger Brian**
**61 Viking Heights Martlesham Woodbridge Suffolk (GB)**

(74) Representative: **Lloyd, Barry George William et al**
**Intellectual Property Unit British Telecom Room 1304 151 Gower Street London WC1E 6BA (GB)**

(56) References cited:
**IEEE INTERNATIONAL CONFERENCE ON COMMUNICATIONS: INTEGRATING COMMUNICATIONS: INTEGRATING COMMUNICATION FOR WORLD PROGRESS, CONFERENCE RECORD, VOLUME 2 OF 3, June 19-22, 1983, BOSTON, (US). Pages D 8.8.1 - D 8.8.5 NEW YORK, (US). S. ONO et al.: "64 KB/s high quality speech codec".**

**IBM TECHNICAL DISCLOSURE BULLETIN, Vol. 19, no. 5, October 1976, NEW YORK, (US) E. HOPNER: "Dual-mode high-quality speech encoder", pages 1909-1910**

Courier Press, Leamington Spa, England.

**Description**

This invention relates to digital coding, and in particular to digital coding employing sub-band coding techniques.

Sub-Band Coding (SBC) is a technique of coding in which a given frequency band is divided into sub-bands which are then separately encoded. SBC may be applied directly to analogue signals, or to a digitised signal such as, for example, a pulse code modulation (PCM) signal.

The application of SBC to low bit rate speech transmission is described in "Digital Coding of Speech in Sub-bands", R. E. Crochiere et al, Bell Systems Technical Journal Vol. 55 No. 8, October 1976, pp. 1069—1085, and in "On The Design of Sub-Band Coders for Low-Bit-Rate Speech Communication", R. E. Crochiere, Bell Systems Technical Journal, Vol. 56, No. 5, May—June 1977, pp. 747—770. The main advantage of SBC is considered to be the freedom to choose the number of quantising steps and hence the allocation of bits required for encoding separately for each sub-band in accordance with perception criteria applicable to that sub-band.

The possibility of adaptively varying the allocation of bits among the sub-bands is discussed by D. Esteban and C. Galand in "32kbps CCITT Compatible Split Band Coding Scheme, 1978 IEEE Int Conf on Acoustics, Speech and Signal Processing, pp. 320—325, where they describe an apparatus for sub-band coding a signal comprising filter means, with at least one intermediate level filter means followed by final filter means, to divide the frequency band of the signal into a plurality of sub-bands via intermediate level sub-bands, quantising and encoding means to quantise and encode each sub-band, and bit allocation means for selecting the number of bits to be used for encoding the respective sub-bands in dependence on the spectral properties of the signal.

According to one aspect of the present invention the bit allocation means includes spectral envelope estimating means whose inputs are connected to the outputs of one or more of the intermediate level filter means.

Preferably, the filter means include first intermediate level filter means to divide the frequency band into two first level sub-bands each of which is subsequently divided further, and the spectral envelope estimating means are coupled to at least the first intermediate level filter means.

Conveniently the first intermediate level filter means can be followed by one or more further intermediate level filter means and the final filter means, each providing a further division into two of the intermediate sub-bands of preceding level, until the required number of sub-bands is obtained. Filter means of this kind are generally referred to as having a tree structure.

Where the frequency band is divided into two first level sub-bands the spectral envelope estimating means may conveniently provide as output a decision variable capable of assuming any one of three distinct values, the first value corresponding to one of the first level sub-bands containing a greater amount of energy than the other, the second value corresponding to said one first level sub-band containing a smaller amount of energy than the other, and the third value corresponding to the sub-bands having substantially equal amounts of energy. In assessing the energy content of these or any other sub-bands appropriate scaling factors may be used to take account of, e.g. speech spectral distribution.

In the case of speech transmission the first value may correspond to voiced speech (e.g. vowels), the second value to unvoiced speech (e.g. fricatives and sibilants) and the third value to an in-between speech condition.

According to another aspect of the present invention there is provided a method of sub-band coding a signal which comprises dividing the frequency band of the signal into a plurality of sub-bands via intermediate level sub-bands, and allocating to each of said plurality of sub-bands an appropriate number of bits for quantisation and encoding in accordance with a bit allocation strategy selected in dependence on the spectral properties of the signal, in which the said selection employs spectral envelope estimates derived from at least one intermediate level of sub-bands.

Preferably, the spectral envelope estimates are derived from the intermediate level sub-bands only.

Previously bit allocation for sub-band coding was either fixed, thereby largely losing the advantage of flexibility, or fully adaptive, requiring very complex circuitry and introducing considerable signal processing delays because the energy of each separate sub-band had to be measured prior to allocating the bits (c.f "Adaptive Transform Coding of Speech Signals", R. Zelinski and P. Noll. IEEE Transactions on Acoustics, Speech and Signal Processing, Vol. ASSP 25, No. 4, Aug. 1977, pp. 299—309). Bit allocation according to the present invention, which may conveniently be called semi-adaptive, avoids the inflexibility of fixed bit allocation without introducing the complexity and the significant delay times of fully adaptive bit allocation. It has the further advantage over fully adaptive bit allocation that the amount of side information to be transmitted can be greatly reduced.

Although it may be applied to analogue signals, the present invention is preferably applied to SBC coding of digitised signals. These may be data signals or digitally encoded analogue signals such as, for example, PCM coded speech signals. Application to a digitised signal permits the use of digital filters such as, for example, quadrature mirror filters, for dividing the frequency band via intermediate level sub-bands into the required plurality of sub-bands.

It will be understood that the aforementioned frequency band may itself be a sub-band of another frequency band.

2

The invention will be described further by way of a preferred embodiment and with reference to the accompanying drawings of which:—

Figure 1 is a schematic diagram of a conventional SBC transmission system; and

Figure 2 is a schematic diagram of an SBC transmission system according to the present invention; and

Figure 3 shows in diagram 3a and 3b a speech sample encoded respectively at 64 kBit/s PCM and 16 kBit/s SBC.

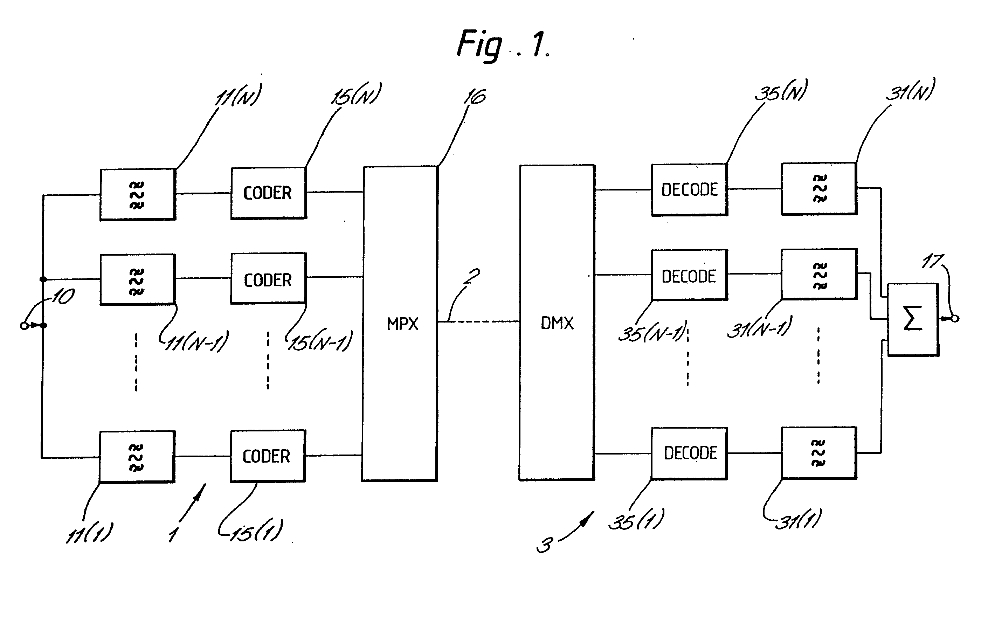

Referring first to Figure 1, a conventional 16 kBit/s SBC transmission system comprises a transmitter terminal 1, a 16 kBit/s digital transmission line 2 and a receiver terminal 3.

The transmitter terminal 1 comprises a signal input 10 connected to the input of N filters 11(1), ... 11(N−1), 11(N) of a filter bank 11, where N is the number of required sub-bands. For 16 kBit/s transmission of ordinary telephone speech the number N of sub-bands generally lies between 4 and 32, and usually is chosen to be 8 or 16. Each of N coders 15(1), ... 15(N−1), 15(N) is connected with its input to the output of a respective one of the filters 11(1), ... 11(N−1), 11(N), and a multiplexer 16 is connected to the output of coders 15(1), ... 15(N−1), 15(N). If quadrature mirror digital filters are employed, the filter bank 11 may have a tree structure instead of the parallel structure shown in Figure 1.

The receiver terminal is, at least functionally, the inverse of the transmitter terminal 1, and comprises a demultiplexer 36, N decoders 35(1), ... 35(N−1), 35(N) and a receiver filter bank 31(1), ... 31(N−1), 31(N).

In operation, an input signal is applied to the filters 11(1) to 11(N) of the filterbank 11. In practice, the input signal is a previously digitised signal to allow the use of digital filters for the filters 11(1) to 11(N). Each of the filters 11(1) to 11(N) passes an appropriate range of frequencies to provide one of the sub-bands of the frequency band of the input signal. Each of the N sub-bands is frequency translated downwards to baseband, sampled at the appropriate Nyquist rate, and is then applied to the input of the appropriate one of the coders 15(1) to 15(N), where it is quantised and digitised according to the number of bits, and hence quantising steps, allocated to the sub-band concerned. (For further details of the SBC technique the reader is referred to the above mentioned articles in Bell Systems Technical Journal). The digitised sub-bands are then time-division-multiplexed and transmitted over the transmission line 2 to the receiver 3, where they are de-multiplexed, and, after decoding, up sampling, and filtering, recombined to appear at the output 17 as a replica of the input signal at terminal 10.

The attraction of SBC lies in that the quantising noise for each sub-band is confined to its respective sub-band, and in the possibility of allocating the quantisation bits to each sub-band according to the desired quality criteria of the transmission. In the case of speech transmission these quality criteria will normally be those for the decoded speech at the receiver terminal.

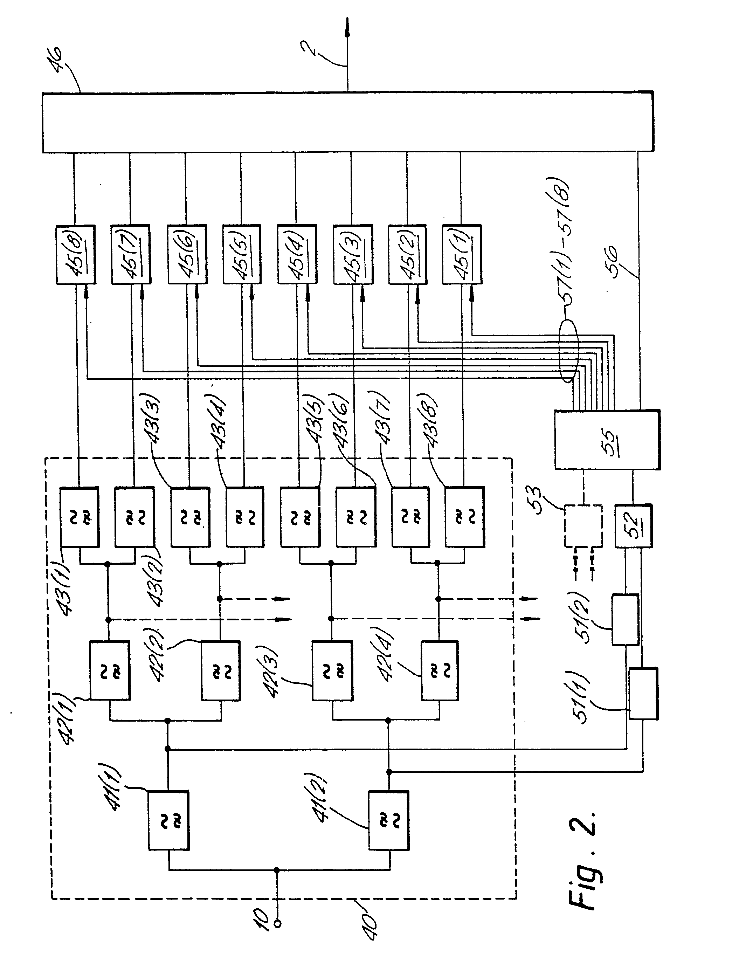

Referring now to Figure 2, a transmitter terminal for a semi-adaptive SBC transmission system using eight sub-bands comprises a signal input 10 connected to a filter bank 40 of QMF digital filters. The filter bank 40 comprises two first level intermediate filters 41(1) and 41(2). The outputs of the first level filters are connected to respective second level filters 42(1), 42(2) and 42(3), 42(4) which divide the first level sub-bands into four second level sub-bands. The four second level sub-bands are divided further in the filters 43(1) to 43(8) into eight third level sub-bands for transmission via quantisers and coders 45(1) to 45(8) and an output multiplexer 46.

Connected also to the outputs of the first level intermediate filters 41(1) and 41(2) are respective average magnitude estimating circuits 51(1) and 51(2) to provide spectral envelope estimates of the lower and upper first level sub-bands. The outputs of the average magnitude estimating circuits 51(1) and 51(2) are applied to a comparator circuit 52.

The output of the comparator circuit 52 is applied to the input of an allocation strategy decision circuit 55. The allocation strategy decision circuit 55 is connected via a line 56 to the multiplexer 46 to transmit side information regarding the adopted allocation strategy (and other control information) and via lines 57(1) to 57(8) to the quantisers and coders 45(1) to 45(8) to allocate to each quantiser and coder the appropriate number of bits for quantisation and encoding.

If desired, further average magnitude estimating circuits (not shown) may be connected to the outputs of the second order intermediate filter pairs 42(1), 42(2) and 42(3), 42(4), as indicated by the intermittent lines, and the resulting spectral envelope estimates be applied to further comparator circuits such as 53 and from there to the allocation strategy decision circuit 55.

Quadrature mirror filters (QMF) can be employed for the filter bank 40, since the filters need not necessarily be sharp-edged to avoid overlapping transition regions, for any aliasing components generated as a result of the downward frequency translation are, on account of symmetry, substantially cancelled at the receiver (not shown in Figure 2).

The QMF filters 40 not only perform the division of the frequency band into sub-bands, but also a downward frequency translation, by discarding at each successive filter level (41, 42, 43), alternate samples.

For the purposes of the further description an input signal of telephone speech bandwidth of 3.4 kHz digitised at 64 kBit/s according to A-Law PCM is assumed, as is a transmission rate of 16 kBit/s for the encoded signal.

The QMF filters are, as discussed previously, cascaded in a tree-structured topology, which provides eight 500 Hz bandwidth signals each sampled at 1 kHz. QMFs are tapped delay line filters, and to provide

3

the minimum FIR (finite inpulse response) filter computation consistent with good speech quality, QM filters are used with 32, 16 and 12 taps respectively at successive branches 41, 42 and 43 in the filter bank tree.

In the quantiser and coders 45(1) to 45(8), each sub-band is quantised and coded with either 0 bits, or with Jayant's one word-memory quantisers with 2, 3 or 4 bits, allocated as appropriate (for details of Jayant's one word memory quantisers see "Adaptive Quantisation With a One-Word Memory", N. S. Jayant, Bell System Techn. Journal Vol. 52, No. 7, September 1973). The 3.5—4.0 kHz band is never transmitted. The quantiser maximum and minimum step sizes, $\Delta$ max and $\Delta$ min, are arranged, to match the dynamic range of the signal within each band. Relative values of $\Delta$ min for each of the sub-bands are determined from a consideration of the average power in the sub-bands and a ratio of $\Delta$ max/$\Delta$ min=128 results in a dynamic range of about 40 dB for each of the encoders.

The bit allocation for the sub-bands is determined as follows. After the first branch 41(1), 41(2) in the QMF filter bank, a spectral envelope estimate approximated by the short-term average magnitude is computed for the speech in each of the first order sub-bands, 0—2 kHz (L) and 2—4 kHz (H). For each band,

$$L= \sum_{i=1}^{24} |s_i|$$

$$H= \sum_{i=1}^{24} |r_i|$$

where L or H is the average low band or high band magnitude estimate at the ith instant and $s_i$ or $r_i$ is the ith QMF output sample from the relevant filter 41(1) or 41(2). At intervals of 6 ms (corresponding to speech stationarity and framing considerations) the difference between average magnitude estimates for the two bands is calculated and a three way decision made as to whether the speech is voiced, unvoiced or intermediate. The intermediate strategy is always implemented, unless L is greater than H×a (change to voiced strategy) or L is less than H×b (changed to unvoiced strategy). The scaling factors a and b are determined by detailed examination of the behaviour of the magnitude difference function during speech and from subjective listening for the different strategies. Good results are obtained for a and b values of 12 and 1.5 respectively. Hysteresis in the decision making process is found to be subjectively advantageous, to prevent rapid strategy changes due to marginal decisions. Thus, if the voiced (unvoiced) strategy is already in progress, then L must be less than H×a/2 (greater than H×2b) to change back to the intermediate strategy. The bit allocation pattern selected is first transmitted to the receive terminal as encoded side information via line 56 and the multiplexer 46..The encoder bit allocation strategy is changed only when the speech samples (whose bit assignment strategy has been determined) have filtered through the subsequent QMF filter branches 42 and 43 at the encoder.

The best subjective performance was obtained with the following bit allocation assignment:—

| Band (kHz) | 0.0 to 0.5 | 0.5 to 1.0 | 1.0 to 1.5 | 1.5 to 2.0 | 2.0 to 2.5 | 2.5 to 3.0 | 3.0 to 3.5 | 3.5 to 4.0 |
|---|---|---|---|---|---|---|---|---|
| **Bit assignment strategy** | Bit allocation pattern | | | | | | | |
| Voiced | 4 | 4 | 3 | 2 | 2 | 0 | 0 | 0 |
| Intermediate | 4 | 3 | 2 | 2 | 2 | 2 | 0 | 0 |
| Unvoiced | 2 | 2 | 3 | 2 | 2 | 2 | 2 | 0 |

Additionally, it is possible under certain conditions to obtain perceptual improvement by artificially widening the bandwidth of the recovered speech when voiced or intermediate bit assignment strategies are selected and there are insufficient quantisation bits to allow the transmission of the 2.5—3.5 kHz frequency bands. This high frequency regeneration process couples energy from the 2.0—2.5 kHz band into the 2.5—3.0 kHz band when the voiced bit assignment is in progress. A similar procedure is performed for the intermediate bit assignment strategy.

At the receiver, the side information indicating the bit allocation is used to separate the individual bands, which are then processed as in Figure 1. The receiver will not be described further since its operation is in principle the same as in known systems employing adaptive bit allocation.

A pair of NEC 7720 digital signal processing (DSP) devices has been used to implement the coder in real-time. At the transmit terminal a single chip codec (not shown) interfaces a standard telephone (not shown) to a single DSP device. This performs PCM A-law to linear conversion, the 8 band QMF band

# 0 141 520

splitting, adaptive quantisation, semi-adaptive bit allocation and synchronisation. At the receiver a single DSP and single channel codec perform the inverse processes.

Both DSP devices are utilised approximately as follows: the available processing time 65% instruction ROM 85%, coefficient ROM 95% and RAM locations 95%.

The perceived quality obtained was found to be highly acceptable for many applications and only marginally different from that of the original when listened through a standard telephone handset. (It should be kept in mind that judgement on quality is highly subjective, since there are no appropriate objective testing techniques available).

The semi-adaptive bit allocation scheme compared to a fully adaptive bit allocation strategy (where the power is measured in each band and then bits are successively allocated to the sub-bands), is relatively simple to implement and gives a significant improvement over a fixed bit allocation scheme.

The present invention may find application, for example, in the following areas:—

a. Four 16 kbit/s speech channels over an end-to-end 64 kbit/s ISDN path.

b. Satellite digital transmission applications to conserve space segment bandwidth. In the future, 16 kbit/s speech coding may be combined with Digital Speech Interpolation (DSI) to give an 8—10 fold increase in digital voice circuit capacity.

c. Digital mobile radio applications. Speech coding for mobile radio may achieve a number of advantages; improved overall quality, a possible lower overall bandwidth requirement using efficient digital modulation techniques, less variation of quality with distance from the base station and amenability to digital encryption techniques.

d. Reduced storage requirements for automatic announcements and voice store-and-forward·systems in digital electronic telephone exchanges.

It is to be particularly noted that in the arrangement described, in which the outputs of the first filter bank are employed to determine the bit allocation, the time delay introduced by the semi-adaptive bit allocation can be substantially reduced as compared with systems which use the filter bank output, where the signal must be delayed to allow for delays in the decision circuitry. Indeed, if, in Figure 2, the path through units 51(1), 51(2) and 55 has a delay less than or equal to that inherent in the filters 42 and 43 (typically 4 ms), no further delay is introduced compared with a non-adaptive system. If these delays are not substantially equal, additional delays are preferably introduced into either the original path or decision path to ensure that the temporal portion of the signal upon which the decision is based embraces the samples actually being coded.

## Claims

1. Apparatus for sub-band coding a signal comprising filter means (40), with at least one intermediate level filter means (41, 42) followed by final filter means (43), to divide the frequency band of the signal into a plurality of sub-bands via intermediate level sub-bands, quantising and encoding means (45) to quantise and encode each sub-band, and bit allocation means (51, 52, 53, 55) for selecting the number of bits to be used for encoding the respective sub-bands in dependence on the spectral properties of the signal, characterised in that the bit allocation means includes spectral envelope estimating means (51, 52, 53) whose inputs are connected to the outputs of one or more of the intermediate level filter means (41, 42).

2. Apparatus as claimed in claim 1 characterised in that the filter means include first intermediate level filter means (41) to divide the frequency band into two first level sub-bands each of which is subsequently divided further, and the spectral envelope estimating means (51) are coupled to at least the first intermediate level filter means.

3. Apparatus as claimed in claim 2 characterised in that the spectral envelope estimating means (51, 52) are arranged to provide as output a decision variable capable of assuming any one of three distinct values, the first value corresponding to one of the first level sub-bands containing a greater amount of energy than the other, the second value corresponding to said one frequency band containing a smaller amount of energy than the other, and the third value corresponding to the sub-bands having substantially equal amounts of energy.

4. Apparatus as claimed in claim 2 or 3 characterised in that the first intermediate level filter means (41) are followed by one or more further intermediate level filter means (42) and the final filter means (43) each of which provides a further division into two of the intermediate level sub-bands of preceding level.

5. Apparatus as claimed in any one of claims 1 to 4 characterised in that it is arranged to operate on a digitised signal.

6. A method of sub-band coding a frequency band which comprises dividing the frequency band into a plurality of sub-bands via intermediate level sub-bands, and allocating to each of said plurality of sub-bands an appropriate number of bits for quantisation and encoding in accordance with a bit allocation strategy selected in dependence on the spectral properties of the signal, characterised in that the said selection employs spectral envelope estimates derived from at least one intermediate level of sub-bands.

7. A method as claimed in claim 6 characterised in that the spectral envelope estimates are derived from intermediate level sub-bands only.

5

**Patentansprüche**

1. Vorrichtung zur Teilbandkodierung eines Signals mit Filtereinrichtungen (40), mit wenigstens einer Zwischenpegel-Filtereinrichtung (41, 42), der eine Endfiltereinrichtung (43) nachgeschaltet ist, um das Frequenzband des Signals in eine Vielzahl von Teilbändern über Zwischenpegel-Teilbänder zu teilen, Quantisier- und Kondiereinrichtungen (45), um jedes Teilband zu quantisieren und zu kodieren, und Bit-Zuweisungs-Einrichtungen (51, 52, 53, 55), um die Anzahl der Bits zu wählen, die zum Kodieren der jeweiligen Teilbänder zu verwenden sind, in Abhängigkeit von den spektralen Eigenschaften des Signals, dadurch gekennzeichnet, daß die Bit-Zuweisungseinrichtungen eine spektrale Hüllkurven-Berechnungseinrichtung (51, 52, 53) aufweisen, deren Eingänge mit den Ausgängen von einer oder mehr der Zwischenpegel-Filtereinrichtung (41, 42) verbunden sind.

2. Vorrichtung nach Anspruch 1, dadurch gekennzeichnet, daß die Filtereinrichtungen eine erste Zwischenpegel-Filtereinrichtung (41) aufweist, um das Frequenzband in zwei erste Pegel-Teilbänder zu teilen, von denen jedes nachfolgend weitergeteilt wird, und die spektrale Hüllkurven-Berechnungseinrichtung (51) mit wenigstens der erste Zwischenpegel-Filtereinrichtung gekoppelt ist.

3. Vorrichtung nach Anspruch 2, dadurch gekennzeichnet, daß die spektrale Hüllkurven-Berechnungseinrichtung (51, 52) so angeordnet ist, daß sie als Ausgang eine Entscheidungsvariable liefert, die in der Lage ist, einen von drei bestimmten Werten anzunehmen, wobei der erste Wert einem der ersten Pegel-Unterbänder entspricht, das einen größeren Energiebetrag als das andere enthält, wobei der zweite Wert dem Frequenzband entspricht, das einen kleineren Energiebetrag als das andere enthält, und der dritte Wert den Teilbändern entspricht, die im wesentlichen gleiche Energiebeträge haben.

4. Verfahren nach Anspruch 2 oder 3, dadurch gekennzeichnet, daß der ersten Zwischenpegel-Filtereinrichtung (41) eine oder mehr weitere Zwischenpegel-Filtereinrichtungen (42) und die Endfiltereinrichtung (43) nachgeschaltet ist, von denen jede eine weitere Teilung in zwei der Zwischenpegel-Teilbänder des vorhergehenden Pegels liefert.

5. Vorrichtung nach einem der Ansprüche 1 bis 4, dadurch gekennzeichnet, daß sie so angeordnet ist, daß sie auf einem digitalisierten Signal arbeitet.

6. Verfahren zur Teilbandkodierung eines Frequenzbandes, welches aufweist: Teilen des Frequenzbandes in eine Vielzahl von Teilbändern über Zwischenpegel-Teilbänder, und Zuweisen zu jeder der Vielzahl von Teilbändern eine geeignete Anzahl von Bits zur Quantisierung, und Kodieren gemäß einer Bit-Zuweisungsstrategie, die in Abhängigkeit von den spektralen Eigenschaften des Signals gewählt ist, dadurch gekennzeichnet, daß die Auswahl spektrale Hüllkurven-Berechnungen einsetzt, die von wenigstens einem Zwischenpegel der Teilbänder abgeleitet sind.

7. Verfahren nach Anspruch 6, dadurch gekennzeichnet, daß die spektralen Hüllkurven-Berechnungen nur von den Zwischenpegel-Teilbändern abgeleitet sind.

**Revendications**

1. Appareillage pour coder en sous-bandes un signal, comprenant un dispositif de filtrage (40), pourvu d'au moins un moyen de filtrage de niveau intermédiaire (41, 42) suivi par un moyen de filtrage final (43), afin de diviser la bande de fréquence du signal en une pluralité de sous-bandes au moyen de sous-bandes de niveaux intermédiaires, un moyen de quantification et de codage (45) pour quantifier et coder chaque sous-bande, et des moyens d'attribution de bits (51, 52, 53, 55) pour sélectionner le nombre de bits à utiliser pour un codage des sous-bandes respectives en relation avec les propriétés spectrales du signal, caractérisé en ce que les moyens d'attribution de bits comprennent des moyens d'estimation d'enveloppe spectrale (51, 52, 53) dont les entrées sont reliées aux sorties d'un ou plusieurs des moyens de filtrage de niveau intermédiaire (41, 42).

2. Appareillage tel que revendiqué dans la revendication 1, caractérisé en ce que le dispositif de filtrage comprend un moyen de filtrage de premier niveau intermédiaire (41) pour diviser la bande de fréquence en deux sous-bandes de premier niveau qui sont chacune divisées encore ultérieurement, et les moyens d'estimation d'enveloppe spectrale (51) sont couplés avec au moins le moyen de filtrage de premier niveau intermédiaire.

3. Appareillage tel que revendiqué dans la revendication 2, caractérisé en ce que les moyens d'estimation d'enveloppe spectrale (51, 52) sont agencés de façon à produire comme signal de sortie une variable de décision capable de prendre l'une quelconque de trois valeurs distinctes, la première valeur correspondant à une des sous-bandes de premier niveau contenant une plus grande quantité d'énergie que l'autre, une seconde valeur correspondant à ladite bande de fréquence contenant une plus petite quantité d'énergie que l'autre, et la troisième valeur correspondant aux sous-bandes contenant des quantités d'énergie sensiblement égales.

4. Appareillage tel que revendiqué dans la revendications 2 ou 3, caractérisé en ce que les moyens (41) de filtrage de premier niveau intermédiaire sont suivis par un ou plusieurs moyens (42) de filtrage d'autres niveaux intermédiaires et par le moyen de filtrage final (43), chacun d'eux produisant une autre division du niveau précédent en deux des sous-bandes de niveau intermédiaire.

5. Appareillage tel que revendiqué dans une quelconque des revendications 1 à 4, caractérisé en ce qu'il est agencé pour opérer sur un signal converti numériquement.

6. Un procédé de codage en sous-bandes d'une bande de fréquence qui consiste à diviser la bande de fréquence en une pluralité de sous-bandes au moyen de sous-bandes de niveaux intermédiaires, et à attribuer à chacune des sous-bandes de ladite pluralité un nombre approprié de bits pour une quantification et un codage en concordance avec une stratégie d'attribution de bits sélectionnée en relation avec les propriétés spectrales du signal, caractérisé en ce que ladite sélection utilise des estimations d'enveloppe spectrale dérivées d'au moins un niveau intermédiaire de sous-bandes.

7. Un procédé tel que revendiqué dans la revendication 6, caractérisé en ce que les estimations d'enveloppe spectrale sont dérivées seulement de sous-bandes de niveau intermédiaire.

# Fig .1.

11(N) 15(N) 16 35(N) 31(N)

~~~ CODER

~~~ CODER

10

11(N-1) 15(N-1)

MPX

2

DMX

DECODE

DECODE

35(N-1) 31(N-1)

~~~

~~~

17

Σ

~~~ CODER

11(1) 1 15(1)

3 35(1)

DECODE

~~~

31(1)

0 141 520

0 141 520

Fig. 2.